# EUROPÄISCHE PATENTANMELDUNG

(11) **EP 0 535 493 A1**
(43) Veröffentlichungstag der Anmeldung: **07.04.1993**
(21) Anmeldenummer: 92116102.2
(22) Anmeldetag: 21.09.1992
(51) Int. Cl.: A47J 42/00

(54) **Gewürzmühle**

(30) Priorität: 30.09.1991 DE 9112184 U
(71) Anmelder: Diefenbach, Berndt, D-80538 München (DE)
(72) Erfinder: Diefenbach, Berndt, D-80538 München (DE)
(74) Vertreter: Kerr, Andrew

(57) **Zusammenfassung**

Eine Gewürzmühle besteht aus einem ersten Gewürzbehälter (2) mit einem ersten Mahlwerk (3) und einem zweiten Gewürzbehälter (4) mit einem zweiten Mahlwerk (5), die durch ein Zwischenstück (6) miteinander verbunden sind. Um die Handhabung der Gewürzmühle zu vereinfachen, verlaufen die Längsachsen (7, 8) der Gewürzbehälter (2, 4) in einem Winkel zueinander, und die Endflächen (13, 14) der Gewürzbehälter (2, 4) liegen in einer gemeinsamen Ebene (15).

## Beschreibung

Die Erfindung betrifft eine Gewürzmühle, bestehend aus einem ersten Gewürzbehälter mit einem ersten Mahlwerk und einem zweiten Gewürzbehälter mit einem zweiten Mahlwerk, die durch ein Zwischenstück miteinander verbunden sind.

Eine derartige Gewürzmühle ist beispielsweise aus der DE-GM 89 14 711 bekannt. Bei der vorbekannten Gewürzmühle verlaufen die Längsachsen der Gewürzbehälter seitlich versetzt und entgegengesetzt parallel zueinander. Hierdurch bilden die Gewürzbehälter eine Kurbel, was die Bedienbarkeit erleichtert.

Aus der DE-GM 88 09 406 ist eine Gewürzmühle bekannt, die aus einem ersten Gewürzbehälter mit einem ersten Mahlwerk und einem zweiten Gewürzbehälter mit einem zweiten Mahlwerk besteht, wobei die Gewürzbehälter durch ein Zwischenstück ebenfalls derart miteinander verbunden sind, daß die Längsachsen der Gewürzbehälter seitlich versetzt und entgegengesetzt parallel zueinander verlaufen.

Die Gewürzbehälter sind von an sich bekannter Bauart. Sie besitzen eine zentrale Stange, die ein Mahlwerkzeug trägt, sowie einen gegenüber der zentralen Stange drehbaren Außenmantel mit einem korrespondierenden Mahlwerkzeug. Die Mühle wird dadurch betätigt, daß der Außenmantel gegenüber der zentralen Stange gedreht wird.

Aufgabe der Erfindung ist es, eine vielseitig verwendbare und einfach bedienbare Gewürzmühle der eingangs angegebenen Art vorzuschlagen.

Gemäß der Erfindung wird diese Aufgabe dadurch gelöst, daß die Längsachsen der Gewürzbehälter in einem Winkel zueinander verlaufen und daß die Endflächen der Gewürzbehälter in einer Ebene liegen. Das Zwischenstück ist derart gestaltet, daß die Längsachsen der Gewürzbehälter in einem Winkel zueinander verlaufen. Im allgemeinen ist die Anordnung so getroffen, daß sich die Längsachsen der Gewürzbehälter auch schneiden. Die Endflächen der Gewürzbehälter liegen in einer Ebene, so daß die Gewürzmühle auf eine Unterlage, beispielsweise einen Tisch, gestellt werden kann. Es ergibt sich ein elegantes, formschönes Aussehen.

Die erfindungsgemäße Gewürzmühle kann auf verschiedene Arten betätigt werden. Zunächst wird derjenige Gewürzbehälter ausgewählt, der betätigt werden soll. Dieser wird dann senkrecht gehalten. Anschließend wird der ausgewählte Gewürzbehälter bzw. die ausgewählte Gewürzmühle betätigt. Hierzu kann die gesamte Gewürzmühle, bestehend aus den beiden Gewürzbehältern, festgehalten werden und der Außenmantel der ausgewählten Gewürzmühle gedreht werden. Es ist aber auch möglich, den Außenmantel des ausgewählten Gewürzbehälters (der ausgewählten Gewürzmühle) mit einer Hand festzuhalten und mit der anderen Hand die gesamte Gewürzmühle zu drehen. Diese Drehung kann dadurch erfolgen, daß die Gewürzmühle im Bereich des Zwischenstücks ergriffen und gedreht wird. Sie kann aber auch dadurch erfolgen, daß der andere, nicht ausgewählte Gewürzbehälter (die andere, nicht ausgewählte Gewürzmühle) ergriffen und um die Längsachse des ausgewählten Gewürzbehälters herumgedreht wird. Auch die erfindungsgemäße Gewürzmühle ist daher als Kurbel betätigbar. Vorteilhafte Weiterbildungen sind in den Unteransprüchen beschrieben.

Die Längsachsen der Gewürzbehälter können in einem rechten Winkel zueinander verlaufen. Es ist aber auch möglich, daß die Längsachsen der Gewürzbehälter in einem spitzen Winkel zueinander verlaufen.

Die Gewürzbehälter können zylinderförmig sein. Vorzugsweise sind die Gewürzbehälter kreiszylinderförmig.

Das Zwischenstück kann aus die Gewürzbehälter fortsetzenden Teilen bestehen. Es kann aber auch einen kugelförmigen Mittelteil aufweisen.

Nach einer weiteren vorteilhaften Weiterbildung ist ein dritter Gewürzbehälter vorgesehen, der auf der den beiden anderen Gewürzbehältern gegenüberliegenden Seite mit dem Zwischenstück verbunden ist. Der dritte Gewürzbehälter ist vorzugsweise in der Verlängerung der Winkelhalbierenden zwischen den ersten beiden Gewürzbehältern angeordnet. Der dritte Gewürzbehälter kann eine Gewürzmühle sein. Er kann aber auch ein Gewürzstreuer sein.

Das Zwischenstück kann aus zwei gelenkig miteinander verbundenen Teilen bestehen. Die Gelenkachse verläuft vorzugsweise durch den Schnittpunkt der Längsachsen der Gewürzbehälter. Vorteilhaft ist es, wenn die Gelenkachse im rechten Winkel zur Winkelhalbierenden zwischen den Längsachsen des ersten und zweiten Gewürzbehälters verläuft. In diesem Fall können die beiden Gewürzbehälter durch eine Drehung des Zwischenstücks in eine fluchtende Lage gebracht werden.

Der oder die Gewürzbehälter können an ihrer Außenseite mehrere, vorzugsweise drei, Rippen aufweisen. Hierdurch kann der Außenmantel besser gedreht werden. Die Rippen sind vorzugsweise als durchlaufende Rippen ausgestaltet. Sie sind ferner in gleichen Winkelabständen angeordnet, bei drei Rippen also im Winkelabstand von 120°. Der oder die Gewürzbehälter können an ihrer Außenseite aber auch geriffelt sein. Die Riffelung befindet sich zumindest in einem Teilbereich. Ferner können auch andere reibungserhöhende Maßnahmen an der Außenseite des oder der Gewürzbehälter vorgesehen werden.

Ausführungsbeispiele der Erfindung werden nachstehend anhand der beigefügten Zeichnung im einzelnen erläutert. In der Zeichnung zeigt
- Fig. 1: ein erstes Ausführungsbeispiel einer Gewürzmühle in einer Seitenansicht,
- Fig. 2: die in Fig. 1 dargestellte Gewürzmühle nach einer Drehung des Zwischenstücks,
- Fig. 3: ein weiteres Ausführungsbeispiel einer Gewürzmühle mit einem dritten Gewürzbehälter,
- Fig. 4: ein weiteres Ausführungsbeispiel einer Gewürzmühle mit einem spitzen Winkel zwischen den Gewürzbehältern,
- Fig. 5: ein weiteres Ausführungsbeispiel mit einem Zwischenstück, das einen kugelförmigen Mittelteil aufweist,
- Fig. 6: eine vergrößerte Darstellung des Außenmantels eines Gewürzbehälters mit einer Riffelung,
- Fig. 7: einen Schnitt längs der Linie VII-VII in Fig. 6 und
- Fig. 8: einen Schnitt durch einen Gewürzbehälter mit drei durchlaufenden Rippen an der Außenseite in einer der Fig. 7 entsprechenden Darstellung.

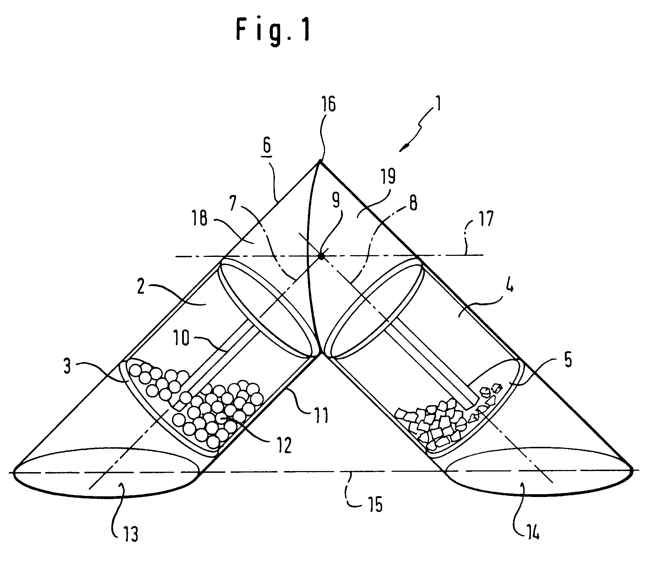

Die in Fig. 1 insgesamt mit 1 bezeichnete Gewürzmühle besteht aus einem ersten Gewürzbehälter 2 mit einem ersten Mahlwerk 3 und einem zweiten Gewürzbehälter 4 mit einem zweiten Mahlwerk 5, die durch ein Zwischenstück 6 miteinander verbunden sind. Die Längsachsen 7,8 der Gewürzbehälter 2,4 verlaufen in einem rechten Winkel zueinander. Sie schneiden sich in Punkt 9 in der Mitte des Zwischenstücks 6.

Der Gewürzbehälter 2 besitzt eine zentrale Stange 10, die ein erstes Mahlwerkzeug trägt. Die zentrale Stange 10 ist fest mit dem Zwischenstück 3 verbunden. Ferner besitzt der erste Gewürzbehälter 2 einen gegenüber dem Zwischenstück 6 drehbar gelagerten Außenmantel 11, der ein korrespondierendes Mahlwerkzeug besitzt. Die Mahlwerkzeuge der zentralen Stange 10 und des Außenmantels 11 bilden das Mahlwerk 3, durch das das Mahlgut 12 bei einer Relativdrehung zwischen Stange 10 und Außenmantel 11 gemahlen wird.

Der zweite Gewürzbehälter 4 ist in derselben Weise wie der erste Gewürzbehälter 2 aufgebaut, so daß er nicht erneut detailliert beschrieben werden muß. Zur Betätigung des ersten Gewürzbehälters 2 kann dieser ergriffen werden. Die Längsachse 7 des ersten Gewürzbehälters 2 wird senkrecht gestellt und über die zu würzende Speise gehalten. Die Betätigung kann dann auf zwei verschiedene Weisen erfolgen:
Zum einen kann die Gewürzmühle 1 festgehalten werden, z.B. im Bereich des Zwischenstücks 6. Mit der anderen Hand wird der Außenmantel 11 gedreht.

Zum anderen kann der Außenmantel 11 mit der einen Hand festgehalten werden. Mit der anderen Hand wird das Zwischenstück 6 und mit ihm die zentrale Stange 10 gedreht. Dies kann dadurch erfolgen, daß das Zwischenstück 6 ergriffen und gedreht wird. Statt dessen oder zusätzlich kann aber auch der andere Gewürzbehälter 4 ergriffen und um die Längsachse 7 des ersten Gewürzbehälters 2 herum nach Art einer Kurbel gedreht werden.

Die Endflächen 13,14 der Gewürzbehälter 2,4 liegen in ein und derselben Ebene 15. Die Gewürzmühle 1 kann also in der in Fig. 1 gezeigten Stellung auf einen Tisch gestellt werden.

Wie aus Fig. 1 ersichtlich, sind die Gewürzbehälter 2,4 zylinderförmig. Das Zwischenstück 6 besteht aus diese Gewürzbehälter 2,4 fortsetzenden Teilen. Diese bilden eine Spitze 16.

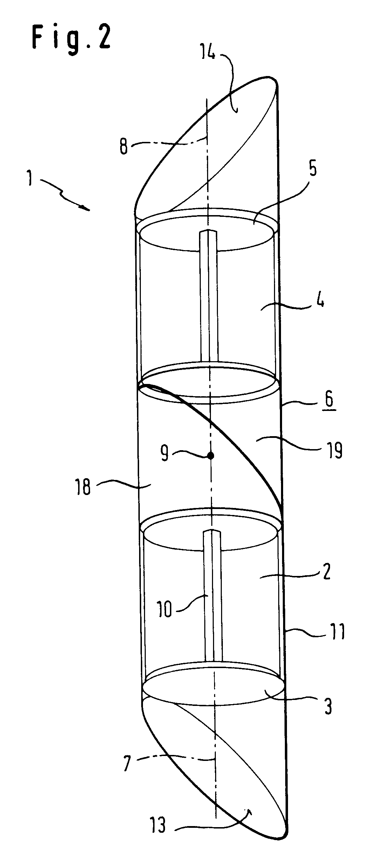

Das Zwischenstück 6 besteht aus zwei gelenkig miteinander verbundenen Teilen 18,19. Die Gelenkachse 17 verläuft durch den Schnittpunkt der Längsachsen 7,8 der Gewürzbehälter 2,4. Ferner verläuft die Gelenkachse 17 im rechten Winkel zur Winkelhalbierenden zwischen den Längsachsen 7,8 des ersten und zweiten Gewürzbehälters 2,4. Hierdurch kann die Gewürzmühle 1 durch eine Drehung um die Gelenkachse 17 in die in Fig. 2 dargestellte Lage gebracht werden, in der die Längsachsen 7,8 miteinander fluchten. In dieser Lage kann die Gewürzmühle 1 auf eine Unterlage, beispielsweise auf einen Tisch, gelegt werden. Sie kann auch auf besonders platzsparende Weise gestapelt und transportiert werden.

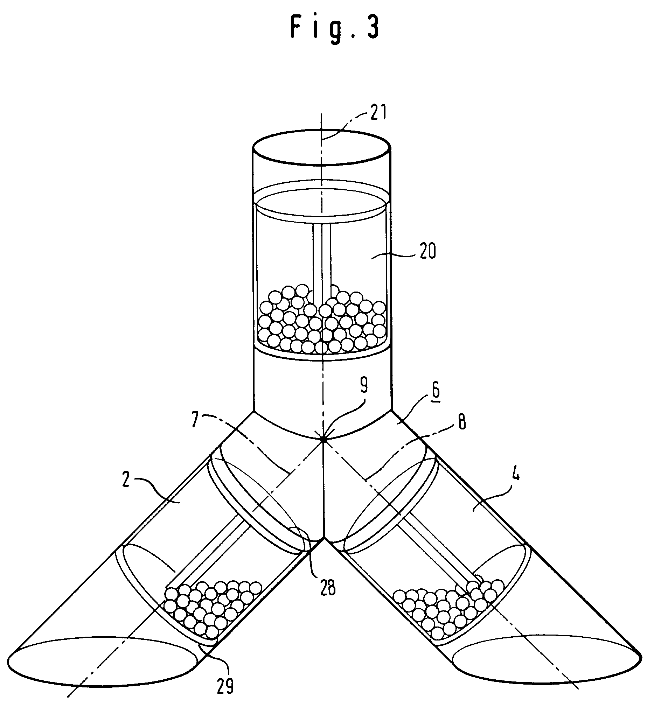

In der in Fig. 3 dargestellten Ausführungsform ist ein dritter Gewürzbehälter 20 vorgesehen, der ebenfalls als Gewürzmühle ausgestaltet ist, der aber auch als Gewürzstreuer ausgestaltet sein könnte. Der dritte Gewürzbehälter 20 ist auf der den beiden anderen Gewürzbehältern 2,4 gegenüberliegenden Seite mit dem Zwischenstück 6 verbunden. Die Längsachse 21 des dritten Gewürzbehälters 20 verläuft durch den Schnittpunkt der Längsachsen 7,8 des ersten und zweiten Gewürzbehälters 2,4; sie liegt in der Verlängerung der Winkelhalbierenden zwischen diesen beiden Längsachsen 7 und 8.

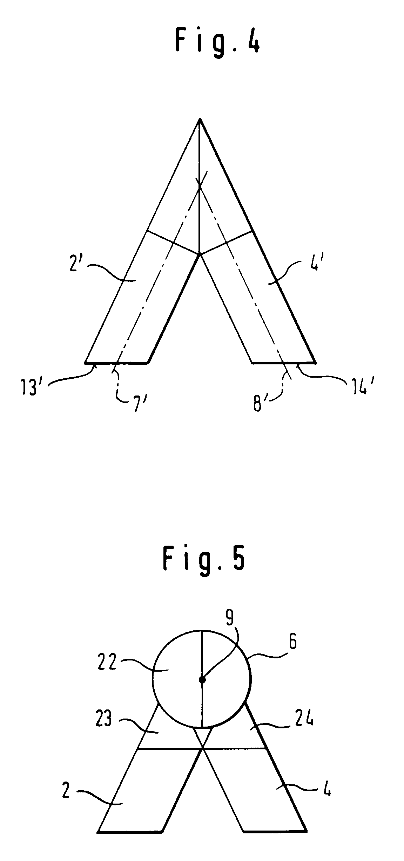

In der in Fig. 4 dargestellten Variante verlaufen die Längsachsen 7', 8' der Gewürzbehälter 2', 4' in einem spitzen Winkel zueinander. Auch hier liegen die unteren Endflächen 13',14' der Gewürzbehälter 2',4' in ein- und derselben Ebene.

Bei der in Fig. 5 gezeigten Ausführungsform weist das Zwischenstück 9 einen kugelförmigen Mittelteil 22 auf. Dieser kugelförmige Mittelteil ist größer als die beiden Ansätze 23,24, an die sich die Behälter 2,4 anschließen. Der kugelförmige Mitteilteil 22 kann als Griff verwendet werden.

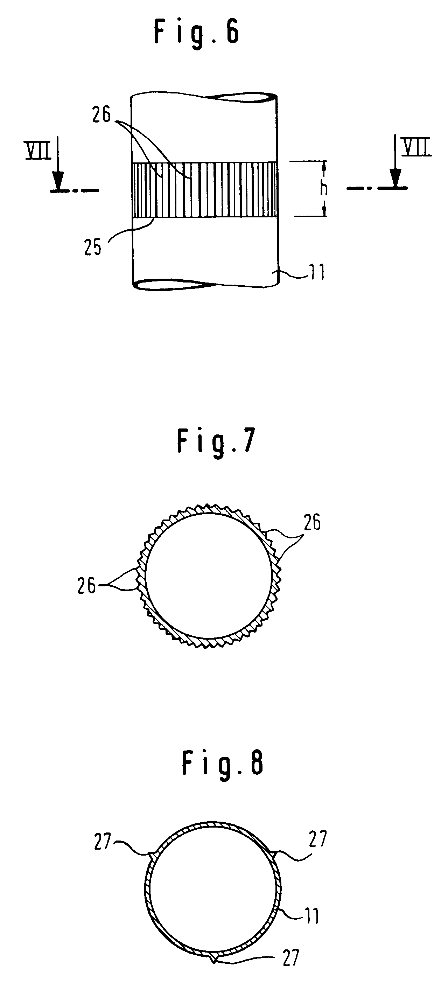

Die Fig. 6 zeigt einen Teil des Außenmantels 11 des ersten Gewürzbehälters 2. In einem Teilbereich 25 mit der Höhe h ist eine Riffelung angebracht, die aus einer Vielzahl von Erhöhungen 26 besteht. Ein Querschnitt durch die Fig. 6 längs der Linie VII-VII ist in der Fig. 7 dargestellt. Durch die Riffelung 26 wird die Reibung beim Ergreifen und Drehen des Außenmantels 11 erhöht, so daß dieser Außenmantel 11 besser gedreht werden kann. Die Fig. 7 zeigt ebenfalls einen Schnitt durch den Außenmantel 11 des ersten Gewürzbehälters 2. In gleichen Winkelabständen von jeweils 120° sind durchgehende Längsrippen 27 vorgesehen, die ebenfalls die Reibung beim Ergreifen und Drehen des Außenmantels 11 erhöhen.

Zum Befüllen der Gewürzbehälter ist - wie in der Fig. 3 dargestellt - zwischen dem Zwischenstück 6 und dem Gewürzbehälter 2 eine lösbare Verbindung 28 vorgesehen, die beispielsweise aus einer Schraubverbindung bestehen kann. Die lösbaren Verbindungen bei den anderen Behältern 4,20 sind ähnlich aufgebaut und in der Zeichnung nicht gesondert dargestellt. Zum Befüllen wird der Gewürzbehälter 2 aufgeschraubt. Anschließend wird er befüllt und wieder an das Zwischenstück 6 angeschraubt. Alternativ kann eine Befüllungsmöglichkeit auch am unteren Ende der Gewürzbehälter vorgesehen sein, wie durch die Bezugsziffer 29 angedeutet.

## Patentansprüche

1. Gewürzmühle, bestehend aus
einem ersten Gewürzbehälter (2) mit einem ersten Mahlwerk (3) und einem zweiten Gewürzbehälter (4) mit einem zweiten Mahlwerk (5), die durch ein Zwischenstück (6) miteinander verbunden sind,
**dadurch gekennzeichnet**,
daß die Längsachsen (7,8) der Gewürzbehälter (2,4) in einem Winkel zueinander verlaufen
und daß die Endflächen (13,14) der Gewürzbehälter (2,4) in einer Ebene (15) liegen.

2. Gewürzmühle nach Anspruch 1, dadurch gekennzeichnet, daß die Längsachsen (7,8) der Gewürzbehälter (2,4) in einem rechten Winkel zueinander verlaufen.

3. Gewürzmühle nach Anspruch 1, dadurch gekennzeichnet, daß die Längsachsen (7,8) der Gewürzbehälter (2,4) in einem spitzen Winkel zueinander verlaufen (Fig. 4).

4. Gewürzmühle nach einem der vorhergehenden Ansprüche, dadurch gekennzeichnet, daß die Gewürzbehälter (2,4) zylinderförmig sind.

5. Gewürzmühle nach einem der vorhergehenden Ansprüche, dadurch gekennzeichnet, daß das Zwischenstück (6) aus die Gewürzbehälter (2,4) fortsetzenden Teilen besteht.

6. Gewürzmühle nach einem der vorhergehenden Ansprüche, dadurch gekennzeichnet, daß das Zwischenstück (6) einen kugelförmigen Mittelteil (22) aufweist (Fig. 5).

7. Gewürzmühle nach einem der vorhergehenden Ansprüche, dadurch gekennzeichnet, daß ein dritter Gewürzbehälter (20) vorgesehen ist, der auf der den beiden anderen Gewürzbehältern (2,4) gegenüberliegenden Seite mit dem Zwischenstück (6) verbunden ist (Fig. 3).

8. Gewürzmühle nach Anspruch 7, dadurch gekennzeichnet, daß der dritte Gewürzbehälter (20) eine Gewürzmühle ist.

9. Gewürzmühle nach Anspruch 7, dadurch gekennzeichnet, daß der dritte Gewürzbehälter (20) ein Gewürzstreuer ist.

10. Gewürzmühle nach einem der vorhergehenden Ansprüche, dadurch gekennzeichnet, daß das Zwischenstück (6) aus zwei gelenkig miteinander verbundenen Teilen (18,19) besteht.

11. Gewürzmühle nach Anspruch 10, dadurch gekennzeichnet, daß die Gelenkachse (17) durch den Schnittpunkt (9) der Längsachsen (7,8) der Gewürzbehälter (2,4) verläuft.

12. Gewürzmühle nach Anspruch 10 oder 11, dadurch gekennzeichnet, daß die Gelenkachse (17) im rechten Winkel zur Winkelhalbierenden zwischen den Längsachsen (7,8) des ersten und zweiten Gewürzbehälters (2,4) verläuft.

13. Gewürzmühle nach einem der vorhergehenden Ansprüche, dadurch gekennzeichnet, daß der oder die Gewürzbehälter (2,4,20) an ihrer Außenseite mehrere, vorzugsweise drei, Rippen (27) aufweisen.

14. Gewürzmühle nach einem der vorhergehenden Ansprüche, dadurch gekennzeichnet, daß der oder die Gewürzbehälter (2,4,20) an ihrer Außenseite geriffelt (26) sind.
